# EUROPÄISCHE PATENTSCHRIFT

(11) **EP 3 118 092 B1**
(45) Veröffentlichungstag und Bekanntmachung des Hinweises auf die Patenterteilung: **13.09.2017**
(21) Anmeldenummer: 15176977.5
(22) Anmeldetag: 16.07.2015
(51) Int. Cl.: B62D 49/06, B62D 55/116

(54) **SELBSTFAHRENDER HOLZHACKER**
SELF-PROPELLED TREE FELLER
CROCHET EN BOIS AUTOMOTEUR

(43) Veröffentlichungstag der Anmeldung: 18.01.2017
(73) Patentinhaber: Jensen GmbH, 24975 Maasbüll (DE)
(72) Erfinder: Bölle, Peter, 24977 Langballig (DE)
(74) Vertreter: Rausch.Wanischeck.Brinkmann.Intellectual Property

(56) Entgegenhaltungen:
- WO-A1-2010/028649
- DE-U1-202009 008 528

## Beschreibung

Die Erfindung betrifft einen selbstfahrenden Holzhacker mit einem Hackwerk, einer Antriebseinrichtung und einem das Hackwerk und die Antriebseinrichtung tragenden Raupenfahrwerk, das einen Fahrwerksrahmen und zwei Raupenschiffe aufweist, die relativ zum Fahrwerksrahmen verfahrbar an diesem angeordnet sind, wobei zur verfahrbaren Anordnung der Raupenschiffe je Raupenschiff ein teleskopierbarer Arm vorgesehen ist.

Holzhacker im allgemeinen sowie selbstfahrende Holzhacker im speziellen sind aus dem Stand der Technik an sich gut bekannt, weshalb es eines gesonderten druckschriftlichen Nachweises an dieser Stelle nicht bedarf.

Holzhacker dienen dazu, Holzschnitt- und/oder -reste zu zerkleinern, das heißt zu häckseln und/oder zu schreddern. Zu diesem Zweck verfügen Holzhacker über ein Hackwerk. Bei einem solchen Hackwerk handelt es sich in der Regel um motorbetriebene Trommel- oder Messerzerkleinerer, die insbesondere aus Sicherheitsgründen innerhalb eines Schutzgehäuses angeordnet sind. Zu zerhackende beziehungsweise zu zerhäckselnde und/oder zu zerschreddernde Biomaterialien, beispielsweise Holzabfälle werden gewöhnlich manuell über einen Zuführschacht in das Gehäuse gegeben, wo dann eine Zerkleinerung durch hacken beziehungsweise häckseln beziehungsweise schreddern stattfindet. Das infolge einer solchen Zerhackung, Zerhäckselung und/oder Zerschredderung anfallende Hack- und/oder Häcksel- und/oder Schreddergut kann über einen separaten Auswurf ausgegeben werden, beispielsweise unter Verwendung eines entsprechenden Förderers.

Holzhacker der vorbeschriebenen Art können nicht-selbstfahrend ausgebildet sein. Sie können in diesem Fall beispielsweise anhängermontiert ausgebildet sein und so mittels eines Zugfahrzeugs zum Einsatzort verbracht werden.

Alternativ ist die Ausgestaltung eines Holzhackers als selbstfahrender Holzhacker. Von Vorteil dieser Ausgestaltung ist, dass es zur Verbringung des Holzhackers zu einem Einsatzort eines separaten Zugfahrzeugs nicht bedarf. Insbesondere im Falle schwer zugänglicher Einsatzorte, beispielsweise im Forstbereich und/oder an Hängen sind selbstfahrende Holzhacker deshalb bevorzugt. Im Falle eines selbstfahrenden Holzhackers dient die Antriebseinrichtung des Holzhackers zur Fortbewegung des Holzhackers als auch einem Betrieb des Hackwerks. Bedienerseitig kann eine Umschaltung vorgenommen werden, wobei es in der Regel aus Sicherheitsgründen nicht möglich ist, gleichzeitig eine Fortbewegung des Holzhackers und einen Betrieb des Hackwerks vorzusehen.

Selbstfahrende Holzhacker verfügen über ein Fahrwerk. Dieses kann je nach Ausgestaltung mit Raupenschiffen oder Rädern ausgerüstet sein. Der Einsatz eines Raupenfahrwerks, das heißt eines Fahrwerks, das über Raupenschiffe verfügt, ist insofern von Vorteil, als dass die Geländefähigkeit des selbstfahrenden Holzhackers verbessert ist.

Ein selbstfahrender Holzhacker der gattungsgemäßen Art mit einem Raupenfahrwerk ist aus der DE 203 21 649 U1 bekannt. Dieser vorbekannte Holzhacker verfügt über einen Körper, an dem teleskopierbare Arme angeordnet sind, die endseitig jeweils eine kettenlegende Anordnung, das heißt ein Raupenschiff tragen. Die Arme des vorbekannten Holzhackers stehen mit Bezug auf eine Frontansicht unter einem Winkel zueinander, und zwar nach Art eines X, weshalb das Fahrwerk dieses Holzhackers auch als "X-Beiner" bezeichnet wird.

Aufgrund der X-förmigen Anordnung der Arme wird bei einem Teleskopieren der Arme sowohl eine Spurweitenänderung, als auch eine Veränderung der Bodenfreiheit erreicht. Eine Verstellung der Spurweite geht mithin mit einer Verstellung auch der Bodenfreiheit einher und umgekehrt.

Um nun einerseits sicherstellen zu können, dass bei vollständig eingefahrenen Armen die Raupenschiffe unterhalb des vom Raupenfahrwerks getragenen Körpers angeordnet sind, bei vollständig ausgefahrenen Armen hingegen eine für den Praxiseinsatz hinreichende Bodenfreiheit gegeben ist, müssen die die Raupenschiffe tragenden Arme entsprechend lang ausgebildet sein. Um dies zu ermöglichen, sind die Arme in sich kreuzender Ausgestaltung in Fahrtrichtung hintereinander angeordnet.

Diese gekreuzte Ausgestaltung der Arme ist insbesondere aus zwei Gründen von Nachteil. Zum einen ergibt sich ein vergleichsweise komplizierter Aufbau, da die Arme aus der Fahrwerksebene bis hin in die Ebene des vom Fahrwerk getragenen Körpers ragen, was zudem einer kompakten Bauform entgegensteht. Zum anderen kann nur eine vergleichsweise geringe Standsicherheit erreicht werden, da es zur Erzielung einer hinreichenden Bodenfreiheit erforderlich ist, die Arme vergleichsweise steil in Relation zum Körper auszurichten, was zu einer ungünstigen Schwerpunktlage führt. Diese ungünstige, weil hohe Schwerpunktlage wirkt sich insbesondere nachteilig bei unter Gefälle stehenden Einsatzorten aus, beispielsweise bei Einsatzorten in Hanglage.

Um den vorbeschriebenen Nachteilen zu begegnen, ist mit der DE 20 2009 008 528 U1 ein selbstfahrender Holzhacker vorgeschlagen worden, dessen die Raupenschiffe tragenden Arme ausschließlich in horizontaler Richtung verfahrbar ausgebildet sind. Eine solcher Ausbildung der die Raupenschiffe tragenden Arme vermag zwar die vorbeschriebenen Nachteile des "X-Beiners" zu überwinden, doch ist auch diese Anordnung nicht frei von Nachteilen, denn eine Verstellung der Raupenschiffe ist nur in horizontaler, nicht aber in vertikaler Richtung möglich, zumindest nicht gleichzeitig. Gemäß einer bevorzugten Weiterentwicklung ermöglicht auch das aus der DE 20 2009 008 528 U1 bekannte Fahrwerk eine Verfahrbewegung der Raupenschiffe in vertikaler Richtung, dies aber endkoppelt von einer Verfahrbewegung der Raupenschiffe in horizontaler Richtung. Die Entkopplung von horizontaler und vertikaler Verfahrbewegung bringt allerdings den Nachteil eines erhöhten Bedienaufwandes im Verwendungsfall mit sich.

Aus dem Stand der Technik ist gemäß der WO 2010/028649 A1 ferner eine Maschine bekannt geworden, die über eine Neigevorrichtung zwischen einem Fahrgestell und einem Aufbau verfügt. Dabei dient die Neigevorrichtung zum Neigen des Aufbaus relativ gegenüber dem Fahrgestell. Dabei umfasst das Fahrgestell teleskopierbare Arme, die endseitig mit Raupenschiffen bestückt sind.

Ausgehend vom Vorbeschriebenen ist es die **Aufgabe** der Erfindung, einen selbstfahrenden Holzhacker der gattungsgemäßen Art dahingehend weiterzuentwickeln, dass bei gleichzeitig hinreichender Standfestigkeit ein praxisgerechter Bedienkomfort gegeben ist.

Zur **Lösung** dieser Aufgabe wird mit der Erfindung ein gattungsgemäßer Holzhacker vorgeschlagen, der sich dadurch auszeichnet, dass die Arme jeweils zumindest drei Abschnitte bereitstellen und einen fahrwerkseitigen Abschnitt, einen relativ zum fahrwerkseitigen Abschnitt verfahrbaren mittleren Abschnitt und einen relativ zum mittleren Abschnitt verfahrbaren raupenschiffseitigen Abschnitt aufweisen, wobei die Arme eine orthogonal zur Ebene des Fahrwerksrahmens ausgerichtete Ebene aufspannen und unter Ausbildung eines festen Winkels im Bereich von 90° bis 160° V-förmig aufeinander stehen, wobei ein jeder Arm einen Hydraulikzylinder beherbergt, der als Mehrfachzylinder, vorzugsweise Doppelzylinder ausgebildet ist.

Im Unterschied zum vorbekannten X-Beiner gemäß der DE 203 21 649 U1 wird mit der erfindungsgemäßen Ausgestaltung eine V-förmige Ausrichtung der die Raupenschiffe tragenden Arme vorgeschlagen. Ein auch nur teilweises Hineinragen der Arme in den vom Raupenfahrwerk getragenen Aufsatz des Holzhackers ist damit vermieden, was einen kompakten Gesamtaufbau ermöglicht. Dabei sind die Arme zudem in Fahrtrichtung nicht hintereinander, sondern in einer Ebene angeordnet, und zwar spannen die Arme eine Ebene auf, die rechtwinklig ausgerichtet ist zur Ebene des Fahrwerksrahmens. Es wird so ein vereinfachter Aufbau erreicht, was insbesondere eine vereinfachte Montage beziehungsweise Demontage des Raupenfahrwerks gestattet.

Mit dem erfindungsgemäßen Aufbau wird insbesondere sichergestellt, dass die Arme des Raupenfahrwerks nicht bis in den vom Raupenfahrwerk getragenen Aufsatz hineinragen, was einerseits eine verbesserte Zugänglichkeit schafft und andererseits eine von den Armen des Raupenfahrwerks gänzlich unabhängige Konstruktion des vom Raupenfahrwerks getragenen Aufsatzes gestattet. Insbesondere der gewonnene Freiheitsgrad in der Aufsatzkonstruktion ist von Vorteil, da es so ermöglicht ist, in ihrer geometrischen Ausgestaltung unterschiedlich ausgebildete Aufsätze nach dem Baukastenprinzip mit ein und demselben Raupenfahrwerk zu kombinieren. Damit können in ihrer technischen Ausgestaltung unterschiedliche Hackwerke und/oder Antriebseinrichtungen unter Verwendung ein und desselben Raupenfahrwerks zu einem erfindungsgemäßen Holzhacker miteinander kombiniert werden. Dies ermöglicht verringerte Herstellkosten.

Die Arme des Raupenfahrwerks stehen in einem unveränderlichen, das heißt festen Winkel zum Fahrwerksrahmen. Der von den Armen eingeschlossene Winkel ist nicht zuletzt in Abhängigkeit der wünschenswerterweise zu erzielenden Schwerpunktlage zu bestimmen und ergibt sich damit auch in Abhängigkeit der Ausbildung des vom Raupenfahrwerks getragenen Aufsatzes in Höhenrichtung. Grundsätzlich sollte der Winkel so bemessen sein, dass eine möglichst niedrige Schwerpunktlage erreicht ist, weil dies zu einer erhöhten Standfestigkeit führt. Der Winkel kann beispielsweise einen Wert von 90° bis 160°, vorzugsweise von 95° bis 150°, noch mehr bevorzugt von 100° bis 130° annehmen.

Aufgrund der V-förmigen Ausgestaltung der Arme wird im Unterschied zur Fahrwerkskonstruktion nach der DE 20 2009 008 528 U1 bei einer Verfahrbewegung der Arme sowohl eine Veränderung der Spurbreite als auch eine Veränderung der Bodenfreiheit erreicht. Die V-förmige Ausgestaltung gestattet mithin eine Spurweitenänderung bei gleichzeitiger Änderung der Bodenfreiheit, und dies bei einem gegenüber der DE 20 2009 008 528 U1 verbesserten Bedienkomfort.

Trotz der Kopplung von Spurweitenänderung und Änderung der Bodenfreiheit haften der erfindungsgemäßen Ausgestaltung nicht die Nachteile des "X-Beiners" an, da die die Raupenfahrwerke tragenden Arme in einer Ebene und mit Bezug auf die Höhenerstreckung vollständig unterhalb des vom Raupenfahrwerks getragenen Aufsatzes angeordnet sind.

Im Unterschied zur Ausgestaltung sowohl nach der DE 203 41 649 U1 als auch nach der DE 20 2009 008 528 U1 ist mit der Erfindung ferner vorgesehen, dass die die Raupenschiffe tragenden Arme jeweils zumindest drei Abschnitte bereitstellen und einen fahrwerkseitigen Abschnitt, einen relativ zum fahrwerkseitigen Abschnitt verfahrbaren mittleren Abschnitt und einen relativ zum mittleren Abschnitt verfahrbaren raupenschiffseitigen Abschnitt aufweisen. Diese Ausgestaltung ermöglicht vergleichsweise kurze Arme in nicht ausgefahrener Stellung, gleichwohl aber vergleichbare lange Arme in der ausgefahrenen Stellung. Die erfindungsgemäße Ausgestaltung stellt somit sicher, dass die Raupenschiffe bei eingefahrenen Arme nicht wesentlich über den Aufsatz des Holzhackers in Breitenrichtung, das heißt in Spurbreitenrichtung hervorstehen. Andererseits kann bei ausgefahrenen Armen eine für praktische Anwendungen hinreichende Bodenfreiheit sichergestellt werden.

Die dreiteilige Ausgestaltung der Arme erbringt in Kombination mit der V-förmigen Ausrichtung derselben den synergetischen Effekt einer insgesamt kompakten Bauform mit niedrigem Schwerpunkt bei gleichzeitiger Möglichkeit, im Bedarfsfall eine hinreichende Bodenfreiheit einstellen zu können. Damit erweist sich die erfindungsgemäße Ausgestaltung insbesondere als standsicher und dies auch bei einem am Aufstellungsort bestehenden Gefälle, womit sich der Holzhacker insbesondere auch für den Einsatz an Hängen eignet, beispielsweise an Bahndämmen oder dergleichen.

Ein jeder der teleskopierbaren Arme beherbergt gemäß einem weiteren Merkmal der Erfindung einen Hydraulikzylinder. Dieser Hydraulikzylinder dient als Betätigungselement und sorgt im Anwendungsfall für ein Aus- beziehungsweise Einfahren des jeweils zugehörigen Arms. Die Anordnung des Hydraulikzylinders im jeweiligen Arm bringt dabei den Vorteil mit sich, dass die Hydraulikzylinder vor äußeren Einflüssen, insbesondere mechanischen Krafteinwirkungen geschützt sind, was einen dauerhaft zuverlässigen Betrieb gestattet.

Der Hydraulikzylinder ist als Mehrfachzylinder, vorzugsweise Doppelzylinder ausgebildet. Dies ermöglicht einen vergleichsweise langen Verfahrweg, zumindest einen längeren Verfahrweg als bei Einfachzylindern, wie diese gemäß der Konstruktion beispielsweise nach der DE 203 21 649 U1 zum Einsatz kommen.

Gemäß einem weiteren Merkmal der Erfindung weist ein Hydraulikzylinder ein fahrwerkseitig angelenktes Hauptzylinderrohr sowie eine raupenschiffseitig angeordnete Kolbenstange auf. Der Hauptzylinder ist mithin einendseitig am Fahrwerk und anderendseitig am jeweiligen Raupenschiff angeordnet. Dabei ist die vom Hydraulikzylinder bereitgestellte Kolbenstange raupenschiffseitig montiert.

Im Falle eines als Doppelzylinder ausgebildeten Hydraulikzylinders ist als weitere Komponente ein Kolbenzylinder vorgesehen. Dieser nimmt die Kolbenstange auf und ist seinerseits vom Hauptzylinder aufgenommen. Im Betriebsfall verfährt mithin der Kolbenzylinder relativ gegenüber dem Hauptzylinder und die Kolbenstange verfährt relativ gegenüber dem Kolbenzylinder. Steuerungstechnisch kann in diesem Zusammenhang vorgesehen sein, dass bei einem Verfahren des Hydraulikzylinders zunächst die Kolbenstange bis auf Anschlag verfährt, bevor im Falle einer weiteren Verfahrbewegung dann der Kolbenzylinder relativ gegenüber dem Hauptzylinderrohr verfährt.

Gemäß einem weiteren Merkmal der Erfindung ist vorgesehen, dass das Raupenfahrwerk einen verschwenkbar am Fahrwerksrahmen angeordneten Tragrahmen aufweist, der das Hackwerk und die Antriebseinrichtung aufnimmt. Das Hackwerk und die Antriebseinrichtung sind mithin unter Zwischenordnung eines Tragrahmens am Fahrwerksrahmen angeordnet. Diese Ausgestaltung erbringt eine konstruktive Entkopplung von Fahrwerksrahmen einerseits und Hackwerk und Antriebseinrichtung andererseits. Eine bedarfsgerechte Kombination nach dem Baukastenprinzip von unterschiedlich ausgebildeten Hackwerken und/oder Antriebseinrichtungen mit einem Raupenfahrwerk ist so in vorteilhafter Weise unterstützt. Insbesondere ist es aus vereinfachten Montagegründen erleichtert, kundenspezifischen Anforderungen gerecht zu werden, da in Größe und Leistungsfähigkeit unterschiedlich ausgebildete Hackwerke und/oder Antriebseinrichtungen mit baugleichen Raupenfahrwerken kombiniert werden können.

Die verschwenkbare Anordnung des Tragrahmens am Fahrwerksrahmen erbringt zudem den Vorteil, dass unabhängig von der Stellung der Arme ein Niveauausgleich am Hang stattfinden kann. Ein solcher Niveauausgleich stellt insbesondere in einer Hanglage sicher, dass Betriebsflüssigkeiten insbesondere der Antriebseinrichtung nicht aus- oder überlaufen und dass verwenderseitig eine Beschickung des Holzhackers mit zu zerkleinernden Gut in gewohnter Weise stattfinden kann. Der erfindungsgemäße Holzhacker stellt insoweit zwei Nivellierungsausgleiche zur Verfügung, einen ersten über die teleskopierbaren Arme und einen zweiten über den verschwenkbar ausgebildeten Tragrahmen.

Es ist gemäß einem weiteren Merkmal vorgesehen, dass zwecks verschwenkbarer Anordnung des Tragrahmens am Fahrwerksrahmen Bolzenscharniere zum Einsatz kommen. Derartige Bolzenscharniere bestehen aus zwei Scharnierteilen, von denen das eine am Tragrahmen und das andere am Fahrwerksrahmen angeordnet ist. Bei gesetztem Bolzen sind die Scharnierteile verschwenkbar miteinander gekoppelt, und zwar um die vom Bolzen definierte Schwenkachse.

Die Verwendung von Bolzenscharnieren hat den Vorteil, dass verwenderseitig die Bolzen der Bolzenscharniere wahlweise gesteckt werden können. In diesem Zusammenhang ist es bevorzugt, dass der Tragrahmen entlang seiner beiden sich gegenüberliegenden Längsseiten jeweils mittels Bolzenscharniere am Fahrwerksrahmen angelenkt ist. Es ist so gestattet, den Tragrahmen entweder mit Bezug auf seine eine Längsseite verschwenkbar am Fahrwerksrahmen anzuordnen oder mit seiner anderen Längsseite, je nachdem, welche Bolzen verwenderseitig gesteckt sind. Damit ermöglicht diese Ausgestaltung einen Niveauausgleich durch Verschwenken des Tragsrahmens entweder in die ein oder in die andere Richtung in Relation zum Fahrwerksrahmen.

Weitere Vorteile und Merkmale der Erfindung ergeben sich aus der nachfolgenden Beschreibung anhand der Figuren. Dabei zeigen
- Fig. 1: in rein schematischer Seitendarstellung einen erfindungsgemäßen Holzhacker;
- Fig. 2: in schematisch perspektivischer Darstellung die Raupenschiffe des erfindungsgemäßen Holzhackers, einschließlich der die Raupenschiffe tragenden Arme und
- Fig. 3: ausschnittsweise in einer schematischen teilgeschnittenen Frontansicht das Raupenfahrwerk des erfindungsgemäßen Holzhackers.

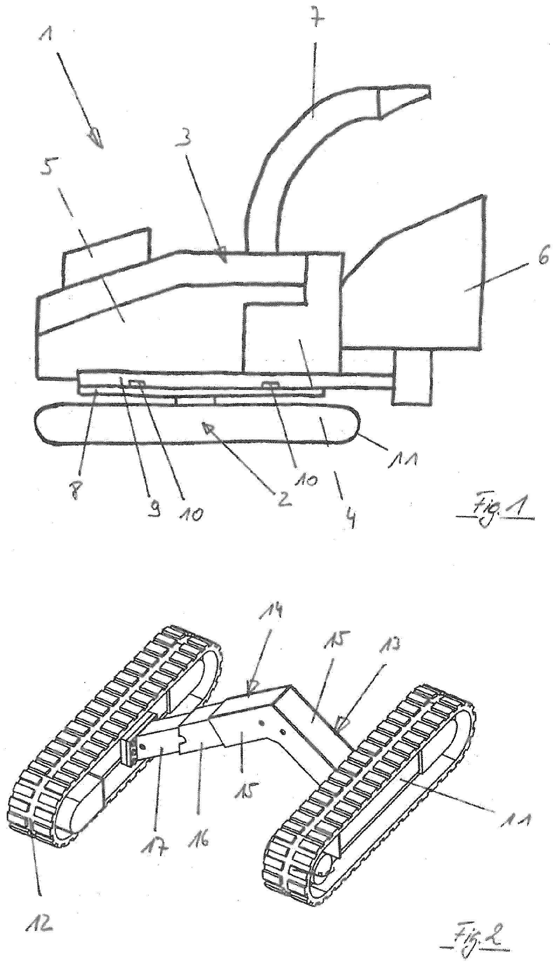

Fig. 1 lässt in schematischer Seitenansicht einen erfindungsgemäßen Holzhacker 1 erkennen. Dieser verfügt in an sich bekannter Weise über ein Raupenfahrwerk 2, das einen Aufsatz 3 trägt. Der Aufsatz 3 weist ein Hackwerk 4 sowie eine Antriebseinrichtung 5 auf. Letztere dient dem Antrieb sowohl des Hackwerkes 4 als auch des Raupenfahrwerks 2, wobei aus Sicherheitsgründen ein gleichzeitiger Betrieb von Raupenfahrwerk 2 und Hackwerk 4 nicht ermöglicht ist.

Im bestimmungsgemäßen Verwendungsfall wird dem Holzhacker 1 zu zerhackendes Material über den Zuführschacht 6 zugeführt. Von hier aus gelangt das zu zerhackende Material zum Hackwerk 4, weiches die bestimmungsgemäße Zerkleinerung des eingeführten Materials vornimmt. Über einen Auswurf 7 wird das vom Hackwerk 4 zerkleinerte Material abgegeben

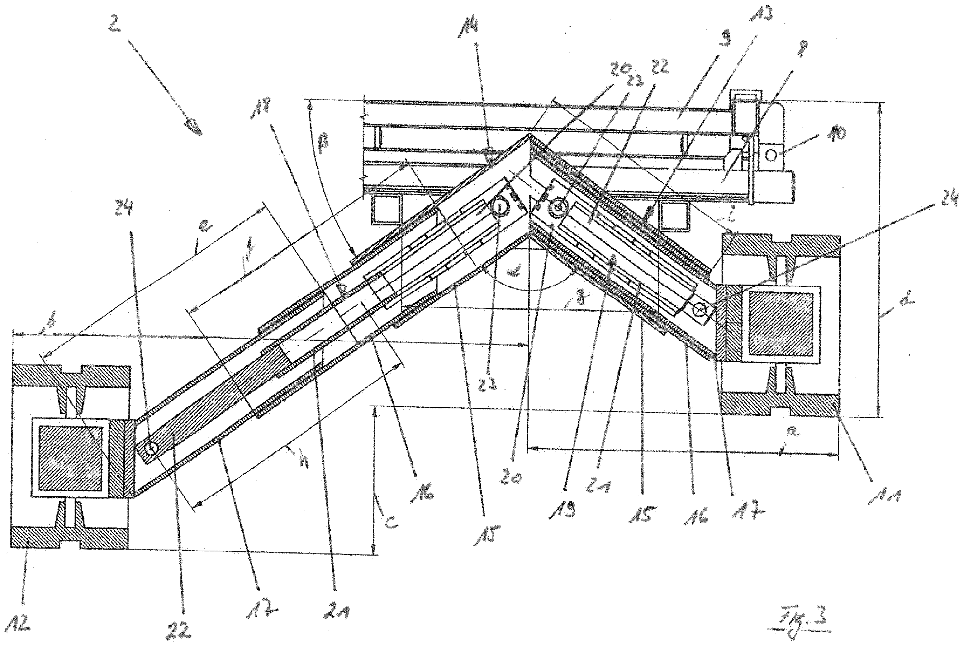

Wie eine Zusammenschau der Figuren 2 und 3 erkennen lässt, verfügt das Raupenfahrwerk 2 über zwei Raupenschiffe 11 und 12, auch kettenliegende Anordnung genannt. Die Raupenschiffe 11 und 12 sind jeweils endseitig eines zugehörigen Arms 13 beziehungsweise 14 angeordnet, wobei der Arm 13 das Raupenschiff 11 und der Arm 14 das Raupenschiff 12 trägt.

Das Raupenfahrwerk 2 weist desweiteren einen Fahrwerksrahmen 8 auf. An diesem sind die Arme 13 und 14 angeordnet. Ferner ist am Fahrwerksrahmen 8 mittels Bolzenscharniere 10 ein Tragrahmen 9 verschwenkbar angeordnet. Der vom Raupenfahrwerk 2 getragene Aufsatz 3 ist mithin unter Zwischenordnung des Tragrahmens 9 am Fahrwerksrahmen 8 befestigt. Dank der Bolzenscharniere 10 kann der Tragrahmen 9 mit Bezug auf die Zeichnungsebene nach Fig. 3 entweder nach links oder nach rechts relativ zum Fahrwerksrahmen 8 verschwenkt werden, was einen Niveauausgleich des Aufsatzes 3 in Hanglage gestattet.

Wie eine Zusammenschau der Figuren 2 und 3 ferner erkennen lässt, stoßen die Arme 13 und 14 V-förmig aufeinander. Sie stehen unter einem festen Winkel α, der im gezeigten Ausführungsbeispiel 110° beträgt. Der Winkel β zwischen der vom Tragrahmen 9 beziehungsweise Fahrwerksrahmen 8 gebildeten Ebene und einem der Arme 13 beziehungsweise 14 beträgt mithin 35°.

Die Arme 13 und 14 stoßen mit ihren fahrwerksseitigen Endabschnitten stirnseitig aneinander an, liegen also in einer gemeinsamen von den Armen 13 und 14 aufgespannten Ebene, wobei die Ebene orthogonal zu der vom Fahrwerksrahmen 8 beziehungsweise vom Tragrahmen 9 aufgespannten Ebene liegt. Die beiden Arme 13 und 14 sind jeweils dreiteilig ausgebildet, stellen jeweils mithin drei Abschnitte bereit. Es sind dabei vorgesehen ein fahrwerksseitiger Abschnitt 15, ein mittlerer Abschnitt 16 sowie ein raupenschiffseitiger Abschnitt 17.

Der fahrwerkseitige Abschnitt 15 eines jeden Arms 13 beziehungsweise 14 ist am Fahrwerksrahmen 8 angeordnet, beispielsweise mit diesem verschweißt. Der mittlere Abschnitt 16 ist gegenüber dem fahrwerksseitigen Abschnitt 15 relativ verfahrbar. Der raupenseitige Abschnitt 17 trägt endseitig das jeweils zugehörige Raupenschiff 11 beziehungsweise 12 und ist relativ verfahrbar zum mittleren Abschnitt 16 und damit auch zum fahrwerkseitigen Abschnitt 15. Wie insbesondere die Darstellung nach Fig. 2 erkennen lässt, trägt der raupenseitige Abschnitt 17 eines jeden Arms 13 beziehungsweise 14 eine Flanschplatte, die im endmontierten Zustand mit dem zugehörigen Raupenschiff 11 beziehungsweise 12 verschraubt ist.

Für eine Teleskopierung eines Arms dient ein Betätigungsmittel in Form eines Hydraulikzylinders. Dabei beherbergt der Arm 13 den Hydraulikzylinder 18 und der Arm 14 beherbergt den Hydraulikzylinder 19.

Die Hydraulikzylinder 18 und 19 sind jeweils als Doppelzylinder ausgebildet und verfügen jeweils über ein Hauptzylinderrohr 20, ein Kolbenzylinderrohr 21 und eine Kolbenstange 22. Dabei ist das Hauptzylinderrohr 20 endseitig am fahrwerkseitigen Abschnitt 15 des zugehörigen Arms und/oder am Fahrwerksrahmen 8 angeordnet. Zur Anordnung kann eine Verbolzung dienen, zu welchem Zweck das jeweilige Hauptzylinderrohr 20 eine Bohrung 23 aufweist.

Raupenschiffseitig ist der jeweilige Hydraulikzylinder 18 beziehungsweise 19 unter Zwischenordnung der jeweiligen Kolbenstange 22 mit dem zugehörigen Raupenschiff 11 beziehungsweise 12 verbolzt, zu welchem Zweck die jeweils zugehörige Kolbenstange 22 über eine Bohrung 24 verfügt.

In der Darstellung nach Fig. 3 ist der mit Bezug auf die Zeichnungsebene nach Fig. 3 linke Arm 13 vollständig ausgefahren, wohingegen der mit Bezug auf die Zeichnungsebene nach Fig. 3 rechte Arm 14 vollständig eingefahren ist.

Hinsichtlich der vollständig eingefahrenen Stellung einerseits beziehungsweise der vollständig ausgefahrenen Stellung der Arme 13 beziehungsweise 14 ergeben sich beispielhaft folgende Maße:
a = 610 mm (Abstand Mittelachse-Außenkante Raupenschiff bei eingefahrenem Arm)
b = 1.020 mm (Abstand Mittelachse-Außenkante Raupenschiff bei ausgefahrenem Arm)
c = 290 mm (Bodenfreiheit, das heißt Abstand Unterkante Raupenschiff ausgefahren zu Unterkante Raupenschiff eingefahren)
d = 605 mm (Abstand Unterkante Raupenschiff eingefahren zu Oberkante Tragrahmen)
e = 533 mm (Längserstreckung raupenschiffseitiger Abschnitt)
f = 527 mm (Längserstreckung mittlerer Abschnitt)
g = 510 mm (Abstand Vierkantrohr-Abstützungen)
h = 500 mm (Armhub)
i = 437 mm (Längserstreckung fahrwerksseitiger Abschnitt).

Die vorstehenden Zahlenwerte sind ausschließlich beispielhaft zu verstehen. Insbesondere die Winkel α und β können auch andere Werte annehmen, je nach gewünschter Schwerpunktlage.

### Bezugszeichenliste

- 1: Holzhacker
- 2: Raupenfahrwerk
- 3: Aufsatz
- 4: Hackwerk
- 5: Antriebseinrichtung
- 6: Zuführschacht
- 7: Auswurf
- 8: Fahrwerksrahmen
- 9: Tragrahmen
- 10: Bolzenscharnier
- 11: Raupenschiff
- 12: Raupenschiff
- 13: Arm
- 14: Arm
- 15: fahrwerksseitiger Abschnitt
- 16: mittlerer Abschnitt
- 17: raupenschiffseitiger Abschnitt
- 18: Hydraulikzylinder
- 19: Hydraulikzylinder
- 20: Hauptzylinderrohr
- 21: Kolbenzylinderrohr
- 22: Kolbenstange
- 23: Bohrung
- 24: Bohrung

## Patentansprüche

1. Selbstfahrender Holzhacker mit einem Hackwerk (4), einer Antriebseinrichtung (5) und einem das Hackwerk (4) und die Antriebseinrichtung (5) tragenden Raupenfahrwerk (2), das einen Fahrwerksrahmen (8) und zwei Raupenschiffe (11, 12) aufweist, die relativ zum Fahrwerksrahmen (8) verfahrbar an diesem angeordnet sind, wobei zur verfahrbaren Anordnung der Raupenschiffen (11, 12) je Raupenschiff (11, 12) ein teleskopierbarer Arm (13, 14) vorgesehen ist, wobei die Arme (13, 14) jeweils zumindest drei Abschnitte (15, 16, 17) bereitstellen und einen fahrwerksseitigen Abschnitt (15), einen relativ zum fahrwerksseitigen Abschnitt (15) verfahrbaren mittleren Abschnitt (16) und einen relativ zum mittleren Abschnitt (16) verfahrbaren raupenschiffseitigen Abschnitt (17) aufweisen,
**dadurch gekennzeichnet, dass** die Arme (13, 14) eine orthogonal zur Ebene des Fahrwerksrahmens (8) ausgerichtete Ebene aufspannen und unter Ausbildung eines festen Winkels (α) im Bereich von 90° bis 160° V-förmig aufeinander stehen, wobei ein jeder Arm (13, 14) einen Hydraulikzylinder (18, 19) beherbergt, der als Mehrfachzylinder, vorzugsweise Doppelzylinder ausgebildet ist.

2. Holzhacker nach Anspruch 1, **dadurch gekennzeichnet, dass** die Arme (13, 14) einen festen Winkel (α) von 95° bis 150°, vorzugsweise von 100° bis 130°, noch mehr bevorzugt von 105° bis 120° einschließen.

3. Holzhacker nach Anspruch 2, **dadurch gekennzeichnet, dass** ein Hydraulikzylinder (18, 19) ein fahrwerksseitig angelenktes Hauptzylinderrohr (20) sowie eine raupenschiffseitig angelenkte Kolbenstange (22) aufweist.

4. Holzhacker nach Anspruch 3, **dadurch gekennzeichnet, dass** ein Hydraulikzylinder (18, 19) ein vom Hauptzylinderrohr (20) aufgenommenes Kolbenzylinderrohr (21) aufweist.

5. Holzhacker nach einem der vorhergehenden Ansprüche, **dadurch gekennzeichnet, dass** das Raupenfahrwerk (2) einen verschwenkbar am Fahrwerksrahmen (8) angeordneten Tragrahmen (9) aufweist, der das Hackwerk (4) und die Antriebseinrichtung (5) aufnimmt.

6. Holzhacker nach Anspruch 5, **dadurch gekennzeichnet, dass** zwecks verschwenkbarer Anordnung des Tragrahmens (9) am Fahrwerksrahmen (8) Bolzenscharniere (10) vorgesehen sind.

7. Holzhacker nach Anspruch 6, **dadurch gekennzeichnet, dass** der Tragrahmen (9) entlang seiner beiden sich gegenüberliegenden Längsseiten jeweils mittels Bolzenscharnieren (10) am Fahrwerksrahmen (8) angelenkt ist.

8. Holzhacker nach Anspruch 7, **dadurch gekennzeichnet, dass** die Bolzen der Bolzenscharniere (10) wahlweise steckbar sind.

## Claims

1. A self-propelled wood chipper having a chipping machine (4), a driving device (5) and a track assembly (2) which carries the chipping machine (4) and the driving device (5), which track assembly comprises a chassis frame (8) and two crawler tracks (11, 12) which are disposed on the chassis frame (8) to be movable with respect to this one, wherein a telescoping arm (13, 14) is provided for each crawler track (11, 12) for the movable arrangement of the crawler tracks (11, 12), wherein the arms (13, 14) respectively provide at least three sections (15, 16, 17) and comprise a section (15) on the side of the track assembly, a middle section (16) which is movable with respect to the section (15) on the side of the track assembly and a section (17) on the side of the crawler track which is movable with respect to the middle section (16),
**characterized in that**
the arms (13, 14) create a plane which is directed orthogonally to the plane of the chassis frame (8) and are arranged on top of each other in a V-shape while forming a fixed angle (α) comprised between 90° and 160°, wherein each arm (13, 14) accommodates a hydraulic cylinder (18, 19) which is designed as a multiple cylinder, preferably as a double cylinder.

2. A wood chipper according to claim 1, **characterized in that** the arms (13, 14) enclose a fixed angle (α) comprised between 95° and 150°, preferably between 100° and 130°, most preferably between 105° and 120°.

3. A wood chipper according to claim 2, **characterized in that** a hydraulic cylinder (18, 19) comprises a main cylinder tube (20) hinged on the side of the track assembly as well as a piston rod (22) hinged on the side of the crawler track.

4. A wood chipper according to claim 3, **characterized in that** a hydraulic cylinder (18, 19) comprises a piston cylinder tube (21) received by the main cylinder tube (20).

5. A wood chipper according to one of the preceding claims, **characterized in that** the track assembly (2) comprises a support frame (9) arranged in a pivoting manner on the chassis frame (8), which support frame receives the chipping machine (4) and the driving device (5).

6. A wood chipper according to claim 5, **characterized in that** bolt hinges (10) are provided on the chassis frame (8) for the pivoting arrangement of the support frame (9).

7. A wood chipper according to claim 6, **characterized in that** the support frame (9) is hinged along its two longitudinal sides, which face each other, to the chassis frame (8) respectively by means of bolt hinges (10).

8. A wood chipper according to claim 7, **characterized in that** the bolts of the bolt hinges (10) are optionally pluggable.

## Revendications

1. Déchiqueteuse de bois automotrice comprenant une machine à déchiqueter le bois en copeaux (4), un dispositif d'entraînement (5) et un châssis à chenilles (2), qui porte la machine à déchiqueter le bois en copeaux (4) et le dispositif d'entraînement (5), le châssis à chenilles comprenant un cadre de châssis (8) et deux trains à chenilles (11, 12), qui sont disposés sur le cadre de châssis (8) de manière déplaçable par rapport à celui-ci, un bras télescopique (13, 14) étant respectivement prévu pour chaque train à chenilles (11, 12) pour la disposition déplaçable des trains à chenilles (11, 12), les bras (13, 14) fournissant chacun au moins trois sections (15, 16, 17) et comprenant une section (15) du côté du châssis à chenilles, une section intermédiaire (16) déplaçable par rapport à la section (15) du côté du châssis à chenilles et une section (17) du côté du train à chenilles, qui est déplaçable par rapport à la section intermédiaire (16),
**caractérisée en ce que**
les bras (13, 14) créent un plan orienté orthogonalement au plan du cadre de châssis (8) et se trouvent l'un au-dessus de l'autre en forme de V en formant un angle fixe (α) compris entre 90° et 160°, chaque bras (13, 14) logeant un cylindre hydraulique (18, 19), qui est conçu comme un cylindre multiple, de préférence comme un cylindre double.

2. Déchiqueteuse de bois selon la revendication 1, **caractérisée en ce que** les bras (13, 14) enferment un angle fixe (α) compris entre 95° et 150°, de préférence entre 100° et 130° et de façon encore plus préférée entre 105° et 120°.

3. Déchiqueteuse de bois selon la revendication 2, **caractérisée en ce qu'**un cylindre hydraulique (18, 19) comprend un tube de cylindre principal (20) articlé du côté du châssis à chenilles ainsi qu'une tige de piston (22) articulée du côté du train à chenilles.

4. Déchiqueteuse de bois selon la revendication 3, **caractérisée en ce qu'**un cylindre hydraulique (18, 19) comprend un tube de cylindre de piston (21), qui est reçu par le tube de cylindre principal (20).

5. Déchiqueteuse de bois selon l'une des revendications précédentes, **caractérisée en ce que** le châssis à chenilles (2) comprend un cadre de support (9) disposé de manière pivotant sur le cadre de châssis (8), le cadre de support recevant la machine à déchiqueter le bois en copeaux (4) et le dispositif d'entraînement (5).

6. Déchiqueteuse de bois selon la revendication 5, **caractérisée en ce que** des charnières à boulons (10) sont prévues sur le cadre de châssis (8) pour la disposition pivotante du cadre de support (9).

7. Déchiqueteuse de bois selon la revendication 6, **caractérisée en ce que** le cadre de support (9) est articulé le long de des deux côtés longitudinaux, qui se font face, sur le cadre de châssis (8) respectivement par moyen de charnières à boulons (10).

8. Déchiqueteuse de bois selon la revendication 7, **caractérisée en ce que** les boulons des charnières à boulons (10) sont facultativement enfichables.
